# EUROPEAN PATENT APPLICATION

(11) **EP 3 263 379 A1**
(43) Date of publication of application: **03.01.2018**
(21) Application number: 15883218.8
(22) Date of filing: 26.02.2015
(51) Int. Cl.: B60K 1/04, B60L 11/18, H01M 2/10

(54) **BATTERY MODULE AND VEHICLE**

(71) Applicant: Kabushiki Kaisha Toshiba, Minato-ku Tokyo 105-8001 (JP)
(72) Inventor: MIYAMOTO, Hidenori, Tokyo 105-8001 (JP); ENOMOTO, Takashi, Tokyo 105-8001 (JP)
(74) Representative: Hoffmann Eitle
(86) International application number: PCT/JP2015/055635
(87) International publication number: WO 2016/135924

(57) **Abstract**

Battery module includes first cell group, second cell group, and a case. First cell group is provided with a plurality of cells each including a top surface on which terminal are arranged, bottom face, pair of long side faces, and short side faces shorter than long side faces, pair of long side faces being arranged to be opposed to each other. Second cell group is provided with a plurality of cells each including long side faces arranged to be opposed to each other, cells being arranged at a position parallel with first cell group. Case accommodate therein first cell group, and second cell group in which long side faces of at least one of first cell group, and second cell group are arranged in a front-back direction of vehicle.

## Description

### Technical Field

Embodiments of the present invention relate to a battery module to be mounted on a movable body such as a vehicle or the like, and a vehicle.

### Background Art

In a movable body using electric energy, particularly in a vehicle such as an automobile or the like, a configuration in which a battery module provided with a plurality of cells is used is known. For example, when a battery module is to be mounted on an automobile, the battery module is arranged in a front part provided in front of a passenger cabin for occupancy of an engine.

### Citation List

### Patent Literature

Patent Literature 1: Jpn. Pat. Appln. KOKAI Publication No. 10-149805

### Summary of Invention

### Technical Problem

A technical problem is to provide a battery module, and a vehicle capable of preventing cells of the battery module from being destroyed.

### Solution to Problem

According to one embodiment, a battery module comprises a first cell group, a second cell group, and a case. The first cell group is provided with a plurality of cells each including a top surface on which terminal are arranged, a bottom face, a pair of long side faces, and short side faces shorter than the long side faces, the pair of long side faces being arranged to be opposed to each other. The second cell group is provided with a plurality of cells each including the long side faces arranged to be opposed to each other, the cells being arranged at a position parallel with the first cell group. The case is arranged in a front part provided in front of a passenger cabin of a vehicle, and configured to accommodate therein the first cell group, and the second cell group in which the long side faces of at least one of the first cell group, and the second cell group are arranged in a front-back direction of the vehicle.

### Brief Description of Drawings

FIG. 1 is a perspective view showing an example of the configuration of a vehicle according to a first embodiment.
FIG. 2 is a perspective view showing an example of the configuration of a battery module to be arranged in the vehicle.
FIG. 3 is a cross-sectional view showing the configuration of the battery module.
FIG. 4 is a perspective view showing an example of the configuration of a battery module of a vehicle according to a second embodiment.

### Description of Embodiments

### (First Embodiment)

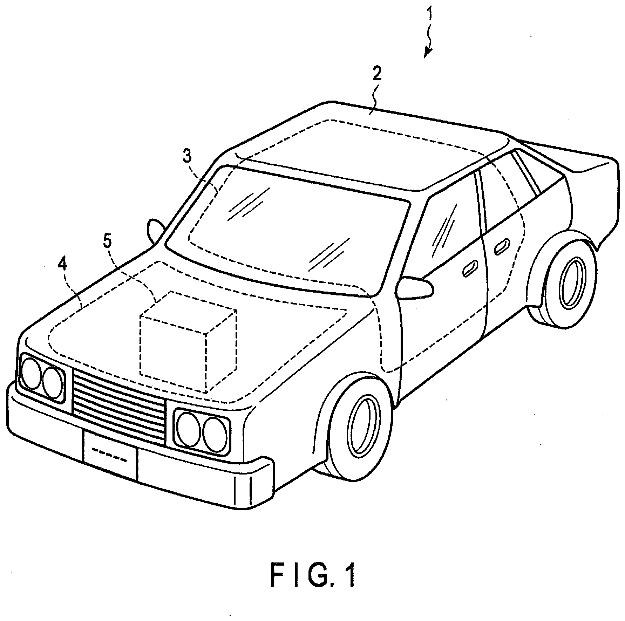

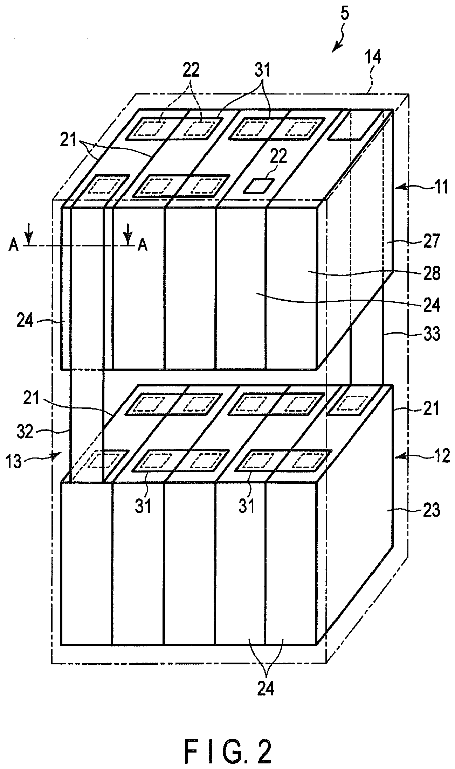

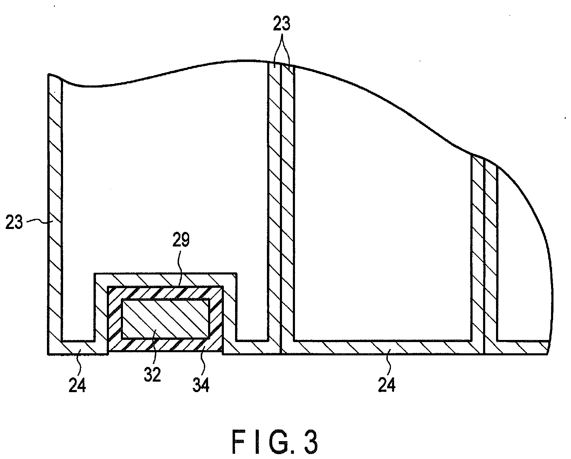

Hereinafter, a vehicle 1 according to a first embodiment will be described by using FIGS. 1 to 3. FIG. 1 is a perspective view showing an example of the configuration of the vehicle 1 according to the first embodiment. FIG. 2 is a perspective view showing an example of the configuration of a battery module 5 to be arranged in the vehicle 1. FIG. 3 is a cross-sectional view showing the configuration of the battery module 5 as a partial cross section.

The vehicle 1 is, for example, an automobile. As shown in FIG. 1, the vehicle 1 is provided with a vehicle body 2 in which a passenger cabin 3 is provided, an engine, and the battery module 5. The vehicle body 2 includes a front part 4 provided in front of the passenger cabin 3. The front part 4 includes a so-called engine compartment. The front part 4 accommodates therein the battery module 5, engine, and the like.

As shown in FIG. 2, the battery module 5 is provided with a first cell group 11, second cell group 12, connecting members 13, and case 14.

The first cell group 11 is provided with a plurality of cells 21 each formed into a rectangular parallelepiped-like shape. The cell 21 is, for example, a nonaqueous secondary cell. On the top surface of the cell 21, a pair of terminals 22 is provided. The side faces of the cell 21 are constituted of a pair of long side faces 23, and a pair of short side faces 24 shorter than the long side faces 23.

The plurality of cells 21 of the first cell group 11 are arranged in such a manner that their long side faces 23 are opposed to each other. The first cell group 11 is constituted by arranging an odd number or an even number of cells 21. For example, the first cell group 11 is constituted of an odd number of cells 21. More specifically, the first cell group 11 is constituted of five cells 21.

The second cell group 12 is provided with a plurality of cells 21, and a cell monitoring unit (CMU) 25 having a shape approximately identical to the cell 21. The second cell group 12 is arranged above the first cell group 11 in the case 14.

The second cell group 12 is constituted by arranging the plurality of cells 21, and CMU 25 in such a manner that their long side faces 23 are opposed to each other. For example, the plurality of cells 21 of the second cell group 12 are arranged at a position parallel to the first cell group 11. That is, the plurality of cells 21 of the second cell group 12 are arranged in a direction perpendicular to the array direction of the plurality of cells 21 of the first cell group 11. More specifically, the plurality of cells 21 of the second cell group 12 are arranged above the plurality of cells 21 of the first cell group 11.

The second cell group 12 is constituted by arranging an odd number or an even number of cells 21, and CMU 25. The second cell group 12 is constituted of cells 21 of a number smaller than the first cell group 11. For example, the second cell group 12 is constituted of an even number of cells 21. More specifically, the second cell group 12 is constituted of four cells 21.

The CMU 25 is a piece of electric equipment. The CMU 25 monitors, for example, a voltage, current, and temperature of each cell 21. The CMU 25 is formed into an external shape approximately identical to the cell 21, i.e., a rectangular parallelepiped-like shape. That is, the side faces of the CMU 25 are constituted of a pair of long side faces 26 each having a shape approximately identical to the long side face 23, and a pair of short side faces 28 each having a shape approximately identical to the short side face 24, and shorter than the long side faces 26. The CMU 25 is arranged in such a manner that the long side face 26 thereof is opposed to the long side face 23 of the cell 21 arranged at one end part of the plurality of cells 21 of the second cell group 21.

FIG. 3 shows a cross section obtained by cutting the second cell group 12 along line AA of FIG. 2. Each of the cell 21, and the CMU 25 which are arranged at both end parts of the second cell group 12 is provided with a groove part 29 having a predetermined depth, and formed in one surface perpendicular to the front-back direction of the vehicle 1. The groove part 29 is formed in, for example, one short side face 24 or 28 from the top surface to the bottom face of the cell 21 or the CMU 25 to a depth greater than the dimension of the thickness of the connecting member 13.

The first cell group 11, and the second cell group 12 are arranged in the case 14 as one united body.

The connecting members 13 includes a plurality of first busbars 31 configured to electrically connect the cells 21 to each other, a second busbar 32 configured to electrically connect the first cell group 11 and second cell group 12 to each other, and a third busbar 33 configured to electrically connect the first cell group 11 and second cell group 12 to each other. Each of the plurality of first busbars 12 electrically connects one of a pair of terminals of a cell 21, and one of a pair of terminals of another cell 21 to each other, the cell 21, and another cell 21 being adjacent to each other.

The second busbar 32 is covered with an insulator 34 except both end parts. The second busbar 32 covered with the insulator 34 is formed in such a manner that the thickness dimension thereof is equal to or smaller than the depth of the groove part 29 of the cell 21. The second busbar 21 is connected, at one end thereof, to a terminal 22 of the cell 21 arranged at one end part of the second cell group 12. The second busbar 21 is connected, at the other end thereof, to a terminal 22 of the cell 21 arranged at one end part of the first cell group 11. The second busbar 32 is arranged in the groove part 29 of the cell 21.

The third busbar 33 is covered with an insulator 34 except both end parts. The third busbar 33 covered with the insulator 34 is formed in such a manner that the thickness dimension thereof is equal to the depth of the groove part 29 of the CMU 25 or smaller than the depth of the groove part 29 of the cell 21. The third busbar 33 is connected, at one end thereof, to a terminal 22 of the cell 21 arranged at one end part of the first cell group 11. The other end of the third busbar 33 is arranged on the top surface of the CMU 25 arranged at one end part of the second cell group 12. The third busbar 33 is arranged in the groove part 29 of the CMU 25.

The case 14 is a case made of a resin, and formed into a rectangular parallelepiped-like shape. The case 14 can accommodate therein the first cell group 11, and the second cell group 12 in a state where they are connected to each other by the connecting members 13, and are arranged one above the other. The case 14 insulates the first cell group 11, and second cell group 12 accommodated therein from the outside.

The case 14 accommodates therein the first cell group 11, second cell group 12, and connecting members 13 connected to each other in a state where the dimension from the bottom face of the first cell group 11 to the top surface of the second cell group 12 is greater than the dimension of the first cell group 11 or the second cell group 12 in the width direction or in the depth direction. The case 14 accommodates therein the first cell group 11, and second cell group 12 in a state where the cells 21 of the first cell group 11, and the short side face 28 of the second cell group 12 are arranged flush with each other.

The case 14 fixes the first cell group 11, the second cell group 12, and the connecting members 13 to the front part 4 of the vehicle 1 in such a manner that the long side faces 23 of the first cell group 11, and the second cell group 12 are in the front-back direction of the vehicle 1, i.e., in the front-back direction of the vehicle body 2, and are arranged in the width direction of the vehicle 1.

According to the battery module 5 configured as described above, when the front part 4 is deformed by front collision of the case where a physical object collides with the vehicle 1 at the front of the vehicle 1 in the front-back direction of the vehicle 1, part of the deformed front part 4 or the physical object comes into contact with the case 14 of the battery module 5, and a stress is applied to the case 14. Accordingly, a stress is applied by the case 14 to the first cell group 11, and the second cell group 12 accommodated in the case 14.

However, the first cell group 11, and the second cell group 12 include a plurality of long side faces 23, and 27 which are in the front-back direction of the vehicle 1, and are arranged in the width direction of the vehicle 1, whereby the area to which the buckling stress resulting from the front collision is applied can be increased. Thereby, it becomes possible to enhance the buckling strength of the first cell group 11, and the second cell group 12 against the stress resulting from the front collision. As a result, it is possible for the battery module 5 to prevent the cells 21, and the CMU 25 constituting the first cell group 11, and the second cell group 12 accommodated in the case 14 from being destroyed.

Besides, in the battery module 5 configured as described above, the number of cells 21 of the second cell group 12 arranged on the upper stage is smaller than the first cell group 11 arranged on the lower stage. Besides, the CMU 25 lighter in weight than the cell 21 is arranged on the upper stage together with the second cell group 12, and hence the battery module 5 is configured in such a manner that the second cell group 12 arranged on the upper stage is lighter in weight than the first cell group 11. Thereby, it becomes possible to lower the position of the center of gravity of the battery module 5, and stabilize the module configuration. As a result, it is possible to simplify the configuration of the case 14.

Besides, the third busbar 33 configured as described above arranges a terminal of the cell 21 arranged at the end part of the first cell group 11 on a surface of the CMU 25 on the same side as the surface on which the terminal 22 of the cell 21 is provided. That is, the third busbar 33 arranges the terminal of the cell 21 arranged at the end part of the first cell group 11 on the top surface of the CMU 25 arranged together with the second cell group 12. Thereby, it becomes possible for the third busbar 33 to arrange the terminals 22 of the cells 21 of the battery module 5 on a surface near the CMU 25, and opposed to the inner surface of the case 14 in a concentrated manner. As a result, it is possible for the third busbar 33 to improve handling/routing of wiring between the piece of electric equipment and the cells 21.

Besides, when the inner surface of the case 14 comes into contact with the first cell group 11, and the second cell group 12 without the case 14 being broken at the time of the front collision, a stress is applied from the inner surface of the case 14 to the first cell group 11, and the second cell group 12. In this case, the stress is simultaneously applied from the inner surface of the case 14 to the plurality of short side faces 24, and 28 arranged perpendicular to the front-back direction of the vehicle 1, and flush with each other. It becomes possible for the battery module configured as described above to reduce the stress to be applied to one short side face 24 or 28 by dispersing the stress applied from the inner surface of the case 14 to the plurality of short side faces 24 and 28. As a result, the battery module 5 can prevent the cells 21 and CMU 25 constituting the first cell group 11, and second cell group 12 accommodated in the case 14 from being destroyed.

Besides, the dimension of the thickness of each of the second busbar 32, and the third busbar 33 covered with the insulator 34 is made equal to the depth of the groove part 29 or smaller than the groove part 29, and hence each of the second busbar 32, and the third busbar 33 is positioned flush with or inside the short side face of the cell 21 or the CMU 25. By this configuration, it becomes possible, when the stress is simultaneously applied from the inner surface of the case 14 to the plurality of short side faces 24, and 28, to prevent the second busbar 32 and the third busbar 33 from coming into contact with the inner surface of the case 14 earlier than the short side faces 24, and 28. As a result, it is possible to prevent the stress from being applied to the cells 21, and the CMU 25 by the second busbar 32 or the third busbar 33.

As described above, according to the battery module 5 of the first embodiment, the plurality of long side faces 23, and 27 in the front-back direction of the vehicle 1, and arranged to be lined up in the width direction of the vehicle 5 are provided, whereby it becomes possible to prevent the cells 21, and the CMU 25 constituting the first cell group 11, and second cell group 12 from being destroyed by enhancing the buckling strength against the stress of the front collision.

### (Second Embodiment)

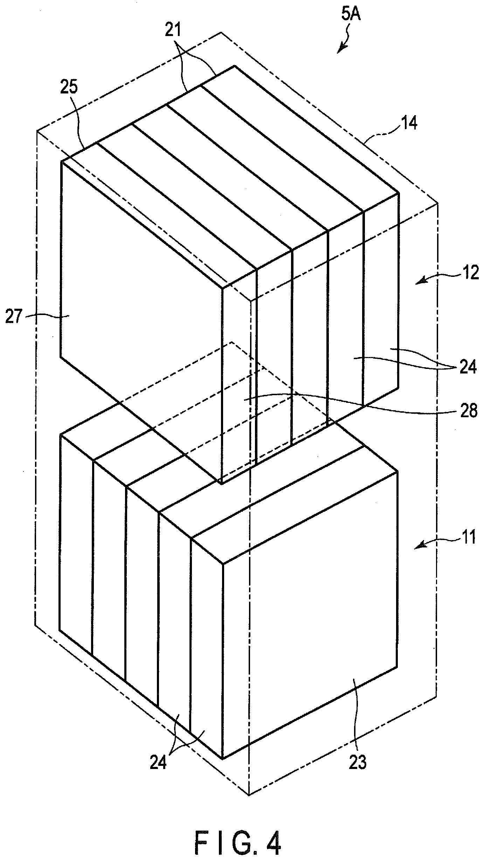

Hereinafter, a battery module 5A to be used in a vehicle 1 according to a second embodiment will be described by using FIG. 4. FIG. 4 is a perspective view showing an example of the configuration of the battery module 5A of the vehicle 1 according to the second embodiment. It should be noted that configurations identical to the first embodiment described previously are denoted by identical reference signs, and their detailed descriptions are omitted.

The battery module 5A of the second embodiment is provided with a first cell group 11, second cell group 12, connecting members 13, and case 14. In the battery module 5A, the first cell group 11, and the second cell group 12 are arranged in two stages in such a manner that the long side faces 23 of the first cell group 11, and the long side faces 23 of the second cell group 12 are perpendicular to each other.

In the battery module 5A configured as described above, it becomes possible to improve the buckling strength against the stress resulting from side collision of the case where a physical object collides with the side of the vehicle 1, or from the front collision in each of the first cell group 11, and second cell group 12. As a result, the battery module 5A can prevent the cells 21 and the CMU 25 constituting the first cell group 11, and the second cell group 12 accommodated in the case 14 from being destroyed.

It should be noted that the number of the cells 21 to be included in each of the first cell group 11, and second cell group 12 is not limited to the examples of the first embodiment and the second embodiment described above. The number of the cells 21 to be included in each of the first cell group 11, and second cell group 12 may be any number if only the configuration in which the area to which the buckling stress is applied when stress is applied to the area is greater than the area to which the buckling stress is applied when stress is applied to the long side faces 23 is employed.

It should be noted that in the examples described above, it has been described that the configuration in which the second cell group 12 includes the CMU 25 is employed. However, the second cell group 12 may be constituted only of cells 25.

It should be noted that a cushioning material may be provided between the second busbar 32 or the third busbar 33, and groove part 29 in the front-back direction of the vehicle 1 in such a thickness that the second busbar 32 or the third busbar 33 does not protrude from the groove part 29. The cushioning material is, for example, an elastic body lower than the second busbar 32 or the third busbar 33 in hardness, and is deformed and generates an elastic stress according to the applied pressure. According to such a configuration, it becomes possible to reduce the stress applied to the second busbar 32 or the third busbar 33 by moving the second busbar 32 or the third busbar 33 toward the cell 21 side or the CMU 25 side according to the deformation of the cushioning material. Besides, the hardness of the cushioning material is made lower than the second busbar 32 or the third busbar 33, and hence it becomes possible to reduce the stress to be transmitted from the second busbar 32 or the third busbar 33 to the cell 21 or the CMU 25.

It should be noted that in the above-mentioned second embodiment, it has been described that in the battery module 5A, the first cell group 11, and the second cell group 12 are arranged in two stages in such a manner that the long side faces 23 of the first cell group 11, and the long side faces 12(27) of the second cell group 11 are perpendicular to each other. However, the configuration of the battery module 5A is not limited to this configuration. The battery module 5A may be configured in such a manner that the battery module 5A is further provided with a third cell group including long side faces forming an angle with the long side faces 23 of the first cell group 11, and second cell group 12, and arranged in parallel with the first cell group 11, and second cell group 12. When the battery module 5A is provided with the third cell group, it becomes possible to enhance the buckling strength against the stress from an oblique direction.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A battery module **characterized by** comprising:
a first cell group provided with a plurality of cells each including a top surface on which terminal are arranged, a bottom face, a pair of long side faces, and short side faces shorter than the long side faces, the pair of long side faces being arranged to be opposed to each other;
a second cell group provided with a plurality of cells each including the long side faces arranged to be opposed to each other, the cells being arranged at a position parallel with the first cell group; and
a case arranged in a front part provided in front of a passenger cabin of a vehicle, and configured to accommodate therein the first cell group, and the second cell group in which the long side faces of at least one of the first cell group, and the second cell group are arranged in a front-back direction of the vehicle.

2. The battery module according to claim 1, **characterized in that**
in the case, the long side faces of both the first cell group, and the second cell group are arranged in the front-back direction of the vehicle, and the plurality of short side faces of both the first cell group, and the second cell group are arranged in a direction perpendicular to the front-back direction of the vehicle, and flush with each other.

3. The battery module according to claim 1, **characterized in that**
in the case, the long side faces of the first cell group, and the short side faces of the second cell group are arranged perpendicular to each other, and the long side faces of the first cell group, and the second cell group, and the short side faces of the first cell group, and the second cell group are respectively arranged flush with each other.

4. The battery module according to claim 1, **characterized in that**
the case accommodates therein connecting members configured to electrically connect the terminals of the cells of the first cell group, and the terminals of the cells of the second cell group to each other, and
the cell arranged at one end part of the first cell group or the second cell group is provided with a groove part formed in a surface perpendicular to the front-back direction of the vehicle to a depth greater than or equal to the dimension of a thickness of the connecting member and, in which the connecting member is to be arranged.

5. The battery module according to claim 4, **characterized in that**
the second cell group is provided with a piece of electric equipment an external shape of which is formed into a rectangular parallelepiped-like shape and, one surface of which is arranged to be opposed to a long side face of the cell arranged at one end part of the second cell group, and
the connecting member arranges the terminal of the cell of the first cell group on a surface of the piece of electric equipment on the same side as the top surface of the cell.

6. A vehicle **characterized by** comprising:
a vehicle body including a front part provided in front of a passenger cabin;
a first cell group provided with a plurality of cells each including a top surface on which terminals are arranged, a bottom face, a pair of long side faces, and short side faces shorter than the long side faces, the pair of long side faces being arranged to be opposed to each other;
a second cell group provided with a plurality of cells each including the long side faces arranged to be opposed to each other, the cells being arranged at a position parallel with the first cell group; and
a case arranged in the front part, and configured to accommodate therein the first cell group, and the second cell group in which the long side faces of at least one of the first cell group, and the second cell group are arranged in a front-back direction of the vehicle.
